**Europäisches Patentamt**

**European Patent Office**

**Office européen des brevets**

(11) Veröffentlichungsnummer: **0 290 521 B1**

(12) **EUROPÄISCHE PATENTSCHRIFT**

(45) Veröffentlichungstag der Patentschrift:
**19.06.91 Patentblatt 91/25**

(21) Anmeldenummer: **87907407.8**

(22) Anmeldetag: **24.11.87**

(86) Internationale Anmeldenummer:
**PCT/CH87/00156**

(87) Internationale Veröffentlichungsnummer:
**WO 88/03881 02.06.88 Gazette 88/12**

(51) Int. Cl.⁵: **B60H 3/00**

(54) **VORRICHTUNG ZUR ABDUNSTUNG EINES WIRKSTOFFES ZUR BEEINFLUSSUNG DER RAUMLUFT.**

(30) Priorität: **28.11.86 CH 4802/86**
**04.12.86 CH 4831/86**
**05.02.87 CH 407/87**

(43) Veröffentlichungstag der Anmeldung:
**17.11.88 Patentblatt 88/46**

(45) Bekanntmachung des Hinweises auf die
Patenterteilung:
**19.06.91 Patentblatt 91/25**

(84) Benannte Vertragsstaaten:
**BE DE FR GB IT SE**

(56) Entgegenhaltungen:
**CH-A- 434 008**

(56) Entgegenhaltungen:
**DE-B- 1 016 144**
**DE-U- 1 660 570**
**DE-U- 1 929 379**
**DE-U- 7 328 892**
**DE-U- 7 605 333**
**FR-A- 1 268 367**
**US-A- 1 570 104**
**US-A- 1 865 241**
**US-A- 2 721 098**
**US-A- 2 898 649**

(73) Patentinhaber: **Weick, Heinz Hermann**
**94, rue de la Servette**
**CH-1202 Genf (CH)**

(72) Erfinder: **Weick, Heinz Hermann**
**94, rue de la Servette**
**CH-1202 Genf (CH)**

## Beschreibung

Die Erfindung betrifft eine Vorrichtung zur Abdunstung eines Wirkstoffes zur Beeinflussung der Raumluft insbesondere in Kraftfahrzeugen, mit zwei länglichen, konzentrisch ineinander gelagerten, eine Kammer für den abzudunstenden Wirkstoff umschliessenden zylindrischen Hohlkörpern, deren Mantelwandungen mit je einer gasdurchlässigen Abdunstzone versehen sind, die durch eine relative gegenseitige Winkelverstellung der Hohlkörper aus einer sich deckenden Abdunstposition in eine drehwinkelversetzte Verschlussposition bringbar sind, weiterhin mit einem am Mantel eines der Hohlkörper angeordneten Befestigungsorgan.

Solche Vorrichtungen dienen zur Desodorisierung der Raumluft, sowie deren Anreicherung mit wohlriechenden, stimulierenden oder auch heilwirksamen Wirkstoffen, wie z.B. Eukalyptusöl bei entzündlichen Erkrankungen der Atemwege.

Das französische Patent Nr. 1 268367 zeigt eine Vorrichtung dieser Art. Bei dieser sind die zylindrischen Hohlkörper teleskopartig ineinandergeschoben. Ihre gegenseitige axiale Lagesicherung bei gleichzeitiger leichter Drehbarkeit des inneren Hohlkörpers verlangt eine grosse Präzision der Bauteile und/oder schwierig anzuformende Rastmittel.

Zwecks Austausches eines verbrauchten Wirkstoffträgers gegen einen neuen ist der innere Hohlkörper in seiner Axialrichtung völlig aus dem äusseren Hohlkörper herauszuziehen. Diese an sich schon unhandliche Manipulation wird noch durch die Rastmittel erschwert. Zudem kann sich die dabei auszuübende Zugkraft ungünstig auf die Befestigungsmittel auswirken, das Gerät also lösen oder deplazieren.

Eine weitere Abdunstvorrichtung mit zwei zylindrischen Hohlkörpern ist durch die deutsche Auslegefrist Nr. 1016144 bekannt geworden. Diese ist konstruktionsspezifisch jedoch dadurch von der prinzipiellen Gestaltung der Vorrichtung nach vorliegender Erfindung verschieden, dass sie etwa topfförmig ausgebildet ist und sich das Befestigungsmittel nicht am Gehäusemantel, sondern am Gehäuseboden befindet. Diese Bauform wird als wenig elegant empfunden und fügt sich weniger gut z.B. in den Innenraum eines Kraftfahrzeuges ein. Das gilt umsomehr, wenn die Vorrichtung für eine grosse Abdunstkapazität ausgelegt werden soll, also einen entsprechend grossen Durchmesser aufweist. Die gegenseitige axiale Lagesicherung zwischen den beiden Hohlkörpern ist wiederum durch konstruktions- und fertigungstechnisch wenig geschätzte Rastmittel gelöst, deren Rastkraft beim Demontieren des inneren Hohlkörpers zum Austausch des Wirkstoffträgers durch eine entsprechend grosse Zugkraft zu überwinden ist, die sich ihrerseits negativ auf das Befestigungsmittel auswirken kann.

Zudem bietet sich diese Vorrichtung nicht für einen Austausch eines eingesetzten Wirkstoffes an, bei dem der demontierte Hohlkörper bis zu seinem nächsten Einsatz aufzubewahren ist, denn dieser ist ein einseitig offener Körper mit einseitig völlig freiliegendem Wirkstoffplättchen.

Die Aufgabe der Erfindung besteht nun darin, eine Abdunstvorrichtung der eingangs definierten Art mit möglichst ökonomischen Mitteln derart weiterzugestalten, dass sich ein Nachfüllen des Wirkstoffes, bzw. der Austausch eines eingesetzten Wirkstoffes gegen einen anderen, mit einem einfachen Handgriff bewerkstelligen lässt, der beim Einsatz der Vorrichtung in einem Kraftfahrzeug auch während des Fahrens durchführbar ist.

Die erfindungsgemässe Lösung ist dadurch gekennzeichnet, dass der äussere Hohlkörper als selbstfedernde, einen teilkreisförmigen Querschnitt aufweisende Klemmhülse ausgebildet ist, welche sich zumindest über die Länge der Abdunstzone des inneren Hohlkörpers erstreckt, und dass der teilkreisförmige Querschnitt wenigstens auf einem Teil der Klemmhülsenlänge die Bogenlänge eines überstumpfen Winkels aufweist.

Bei verbrauchtem Wirkstoff lässt sich der innere Hohlkörper aus der Klemmhülse aus- und wieder in diese einklipsen. Da sich die Eigenelastizität der Klemmhülse konstruktiv sowie durch Materialwahl bestimmen lässt, ist der Wechselvorgang sehr geschmeidig und daher in einem Kraftfahrzeug ohne besondere Konzentration, d.h. auch während des Fahrens durchführbar. Fabrikationstechnisch unerwünschte Rastüberschneidungen sind eliminiert.

Soll ein z.B. gegen Erkältung eingesetzter Wirkstoff gegen einen z.B. gegen Müdigkeit wirkenden ausgetauscht werden, so geschieht das in gleicher Weise mit dem zusätzlichen Vorteil gegenüber der Vorrichtung nach der genannten deutschen Auslegeschrift, dass der Benutzer dabei nicht mit dem den Wirkstoff enthaltenden Organ in Berührung kommen kann, und der ausgewechselte innere Hohlkörper bis zu seiner erneuten Verwendung problemlos aufzubewahren ist.

Nach weiterer Erfindung kann die Vorrichtung mit einer quer zur Vorrichtungslängsachse ausgerichteten, sich mit ihrer Klemmebene etwa tangential zur Vorrichtung erstreckenden Klemmspange zum Anheften an die Sonnenblende versehen sein. Solche Klemmspangen-Befestigungen sind an sich bekannt, wie das US Patent Nr. 1 570104 in Bezug auf eine einrollbare, an einem Autofenster anhängbare Landkarte zeigt.

Bei der erfindungsgemässen Vorrichtung ist eine solche Klemmfeder besonders geeignet, weil auf diese weder beim Auswechseln des inneren Hohlkörpers noch beim Regulieren der Abdunstkapazität Querkräfte einwirken, die zum Verrutschen des Klemmsitzes führen könnten.

Solche Querkräfte entstehen bei der Vorrichtung nach dem französischen Patent Nr. 1 268367 beim Auswechseln des inneren Hohlkörpers und bei der Vorrichtung nach der deutschen Auslegeschrift Nr. 1016144 beim Regulieren der Abdunstkapazität.

Weitere Erfindungsmerkmale gehen aus der nachfolgenden Figurenbeschreibung hervor.

In der Zeichnung sind Ausführungsbeispiele der Erfindung dargestellt. Es zeigen :

Fig. 1 eine teilgeschnittene Draufsicht einer mit einer Klemmspange bestückten Abdunstvorrichtung, deren äusserer zylindrischer Hohlkörper als Klemmhülse ausgebildet ist,

Fig. 2 einen Schnitt A-A nach Fig. 1,

Fig. 3 in schematischer Darstellung einen Teil eines Innenraumes eines Kraftfahrzeuges mit einer an einer Sonnenblende montierten Abdunstvorrichtung,

Fig. 4 einen Querschnitt durch eine Abdunstvorrichtung, deren innerer Hohlkörper mit einem wirkstoffgefüllten auswechselbaren Tampon bestückt ist, (C-C nach Fig. 5)

Fig. 5 einen stirnseitigen Längsbereich nach Fig. 6 im Längsschnitt B-B.

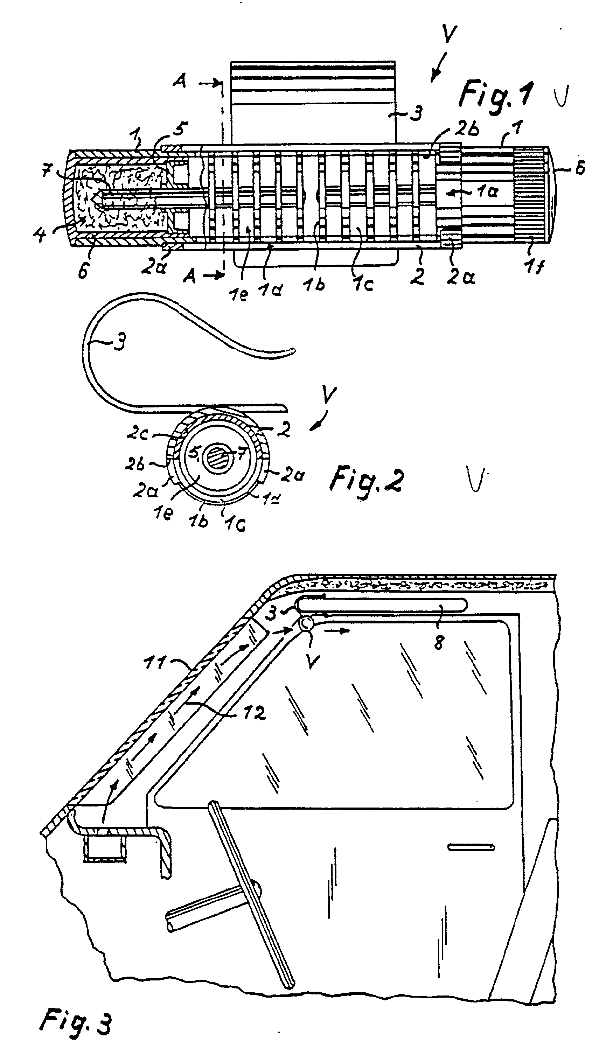

Entsprechend dem Ausführungsbeispiel nach den Fig. 1 und 2 ist der innere Hohlkörper 1 der Abdunstvorrichtung V als Hohlzylinder ausgebildet, der als Abdunstzone in seinem mittleren Längsbereich 1a ein von Querstegen 1b in Schlitze 1c aufteiltes Abdunstfenster 1d aufweist. Dieses besitzt eine Bogenlänge von ungefähr 180°. Der genannte Längsbereich 1a ist im Durchmesser etwas verjüngt und wird von dem als selbstfedernde Klemmhülse 2 halbkreisförmigen Querschnitts ausgebildeten äusseren Hohlkörper umgriffen, wobei die beiden Endbereiche der Klemmhülse 2 den Hohlzylinder 1 mittels angeformter Zungen 2a etwas weiter umschliessen. Die Innenfläche 2c der Klemmhülse 2 dient dem Hohlzylinder 1 somit als Drehlager, während ihre Abdunstzone von ihrer längsseitigen Unterbrechung, ihrem sogenannten Abdunstfenster 2b gebildet wird. Aussenseitig ist der Klemmhülse 2 auf ihrer dem Abdunstfenster 2b entgegengesetzten Seite die senkrecht zur Vorrichtungslängsrichtung ausgerichtete Klemmspange 3 angeformt, deren Klemmebene etwa tangential zur Vorrichtung verläuft.

In den Endbereichen des Hohlzylinders 1 sind kartuschenartige, wirkstoffgefüllte Tampons 4 enthaltende und mittels der Deckel 5 abgeschlossene Hülsen 6 eingeschoben. Als Abdunstorgane dienen gradlinige Dochte 7, welche sich aus den Hülsen 6 heraus durch die Deckel 5 in die Abdunstkammer 1e des Hohlzylinders 1 erstrecken.

Zwecks leichteren manuellen Drehens des Hohlzylinders 1 gegenüber der Klemmhülse 2 sind diesem in seinen Endbereichen Rändelungen 1f angeformt.

In der in den Figuren 1 u. 2 gezeigten Darstellung des Hohlzylinders 1 deckt sich sein Abdunstfenster 1d ganzflächig mit dem Abdunstfenster 2b der Klemmhülse 2. Die Abdunstung ist somit auf ein Maximum eingestellt. Durch Drehen des Hohlzylinders 1 bewegt sich das Abdunstfenster 1d in die Klemmhülse 2 hinein, wodurch sich die wirksame Abdunstfläche kontinuierlich bis auf 0 verkleinert.

Die Ausbildung und Anordnung der Klemmspange 3 dient der Befestigung der Abdunstvorrichtung V an einer Kraftfahrzeug-Sonnenblende 8. Die Klemmspange 3 wird von einer Sonnenblendenlängsseite her aufgesteckt, wodurch sich die Vorrichtung unterseitig der Sonnenblende 8 plaziert und dort – ausserhalb des Manipulationsbereichs des Fahrzeuglenkers und vor Sonneneinstrahlung geschützt – von dem an der Windschutzscheibe 11 hochsteigenden und oberhalb dieser nach hinten in den Fahrzeugraum umgelenkten Luftstrom 12 getroffen wird. Dieser bedingt eine erhebliche Steigerung der Abdunstintensität. Durch leichtes Neigen der entsprechenden Sonnenblende 8 lässt sich der Luftstrom exakt auf den Kopf des Fahrzeuglenkers resp. Beifahrers ausrichten.

Es ist leicht einzusehen, dass sich der Hohlzylinder 1 mühelos aus der Klemmhülse 2 herausziehen sowie in diese einklipsen lässt. Durch diese einfache Handhabung ist es möglich, einen bestimmten Wirkstoff selbst während der Fahrt gegen einen Wirkstoff anderer Komposition auszutauschen, was einfachst durch Einklipsen eines anderen Hohlzylinders geschieht oder einen leeren Hohlzylinder durch einen neuen zu ersetzen. Der mit den Kartuschen 6 und den Dochten 7 komplett bestückte Hohlzylinder 1 wird somit als Austauscheinheit erworben.

Indem der Wirkstoff in Kammern gespeichert ist, denen er durch die Dochte 7 nach und nach entzogen wird, garantiert die Vorrichtung eine verhältnismässig gleichmässige Langzeitabdunstung.

Obwohl durch eine Bestückung des Hohlzylinders 1 mit zwei Austauschkartuschen die beste Abdunstleistung und eine maximale Langzeitwirkung erzielbar sind, ist seine Bestückung mit nur einer Wirkstoffkammer gleichwohl denkbar.

In diesem Fall kann dem Hohlzylinder eine die Wirkstoffkammer vom Abdunstraum trennende Wandung sogleich angeformt werden, wodurch sich eine einschiebbare Kartusche 6 erübrigt. Der Hohlzylinder wäre dabei auf beiden Stirnseiten mit einem einfachen Deckel zu verschliessen.

Beim beschriebenen Ausführungsbeispiel ist die Klemmspange 3 der Klemmhülse 2 direkt angeformt. Diese beiden Organe lassen sich auch als separate Teile spritzen und mittels einer Steckverbindung aneinander befestigen.

Die gegenseitige axiale Lagesicherung zwischen dem Hohlzylinder 1 und der Klemmhülse 2 ist – wie beschrieben – durch eine Durchmesser-Reduzierung des Hohlzylinders 1 erreicht. Den gleichen Zweck würden beidseitig der Klemmhülse 3 auf dem Hohlzylindermantel angeordnete Vorsprünge, kreisringförmige Stege oder Stegnutenanordnungen erfüllen.

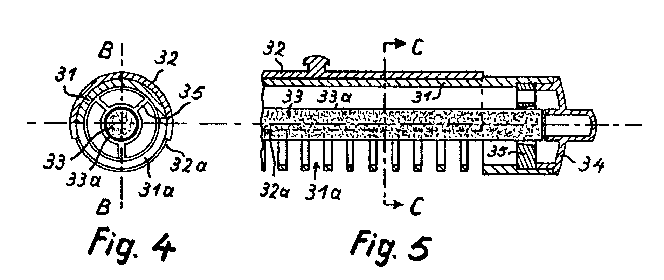

Anhand der Fig. 4 und 5 wird gezeigt, dass Dochte und Wirkstoffkammer zu einem Organ vereinigbar sind. Bezüglich des inneren Hohlkörpers 31 und des äusseren, als Klemmhülse ausgebildeten Hohlkörpers 32 mit ihren Abdunstfenstern 31a, 32a entspricht die Abdunstvorrichtung dem ersten Ausführungsbeispiel. Etwa zentrisch im Hohlkörper 31 befindet sich ein mit Wirkstoff gefüllter auswechselbarer Tampon 33, dessen Mantel 33a wenigstens teilflächig porös ist. Eingesetzt bzw. ausgewechselt wird der Tampon 33 bei geöffneter Verschlusskappe 34 und lagert mit seinen Endbereichen in Zentrierorganen 35, die stirnseitig in den inneren Hohlkörper 31 eingesetzt sind.

Wird der Tampon 33 alternativ in hohlzapfenartigen Vorsprüngen der Verschlusskappen 34 gelagert, erübrigen sich dadurch die Zentrierorgane 35.

Insbesondere die erfindungsgemässe Ausbildung des äusseren Hohlkörpers 2 als Klemmhülse entsprechend der Fig. 1 u. 2 ist nicht an die Bestückung der Vorrichtung mit der Klemmfeder 3 gebunden. Alternativ kann als Befestigungsmittel eine Kleb- bzw. magnetische Haftfläche dienen, obwohl solche Befestigungsarten vom Verbraucher nicht besonders geschätzt werden.

## Ansprüche

1. Vorrichtung (V) zur Abdunstung eines Wirkstoffes zur Beeinflussung der Raumluft insbesondere in Kraftfahrzeugen, mit zwei länglichen, konzentrisch ineinander gelagerten, eine Kammer für den abzudunstenden Wirkstoff umschliessenden zylindrischen Hohlkörpern (1, 2), deren Mantelwandungen mit je einer gasdurchlässigen Abdunstzone (1d, 2b) versehen sind, die durch eine relative gegenseitige Winkelverstellung der Hohlkörper aus einer sich deckenden Abdunstposition in eine drehwinkelversetzte Verschlussposition bringbar sind, weiterhin mit einem am Mantel eines der Hohlkörper angeordneten Befestigungsorgan (3), dadurch gekennzeichnet, dass der äussere Hohlkörper (2) als selbstfedernde, einen teilkreisförmigen Querschnitt aufweisende Klemmhülse ausgebildet ist, welche sich zumindest über die Länge der Abdunstzone (1d) des inneren Hohlkörpers (1) erstreckt, und dass der teilkreisförmige Querschnitt wenigstens auf einem Teil der Klemmhülsenlänge die Bogenlänge eines überstumpfen Winkels aufweist (2a).

2. Vorrichtung nach Anspruch 1, dadurch gekennzeichnet, dass zwecks gegenseitiger axialer Lagesicherung von innerem Hohlkörper (1) und Klemmhülse (2) eines dieser beiden Organe in eine ringnutenartige Anformung (1a) des anderen Organs eingreift.

3. Vorrichtung nach Anspruch 1, dadurch gekennzeichnet, dass wenigstens eines der beiden Endbereiche des inneren Hohlkörpers (1) als mit einem den Wirkstoff enthaltenden Tampon (4) bestückte Kammer ausgebildet ist, aus der heraus sich ein als Abdunstorgan wirkender, gradliniger Docht (7) in den die Abdunstzone aufweisenden Mittelbereich des inneren Hohlkörpers (1) erstreckt.

4. Vorrichtung nach Anspruch 3, dadurch gekennzeichnet, dass der innere Hohlkörper (1), die Wirkstoffkammer (bzw. -kammern) und der Docht (7) (bzw. die Dochte) eine in die Klemmhülse (2) einschnappbare Austauscheinheit bilden.

5. Vorrichtung nach Anspruch 3, dadurch gekennzeichnet, dass die Wirkstoffkammer von einer kartuschenartigen, in einen Endbereich des inneren Hohlkörpers (1) eingeschobenen Hülse (6) umschlossen ist.

6. Vorrichtung nach Anspruch 1, gekennzeichnet durch ein etwa zentrisch im inneren Hohlkörper (31) auswechselbar angeordnetes stabförmiges Organ (33), dessen Mantel (33a) wenigstens teilflächig porös ist und eine Füllung saugfähigen, den Wirkstoff enthaltenden Materials umschliesst.

7. Vorrichtung nach Anspruch 1, dadurch gekennzeichnet, dass die Klemmhülse (2) aussenseitig mit einem Befestigungsmittel wie Klebfläche, magnetische Haftfläche, Klemmspange (3) versehen ist.

8. Vorrichtung nach Anspruch 7, dadurch gekennzeichnet, dass die Klemmspange (3) quer zur Vorrichtungslängsachse ausgerichtet ist und sich mit ihrer Klemmebene etwa tangential zur Vorrichtung (V) erstreckt.

## Revendications

1. Dispositif (V) pour l'évaporation d'une substance active propre à exercer une influence sur l'air ambiant, en particulier dans des vehicules automobiles, comprenant deux corps creux cylindriques oblongs (1, 2) montés concentriquement l'un dans l'autre et entourant une chambre pour la substance active à évaporer, corps creux dont les parois latérales sont munies respectivement de zones d'évaporation perméables aux gaz (1d, 2b) qui, par un déplacement angulaire relatif des corps creux l'un par rapport à l'autre, peuvent être mises, à partir d'une position d'évaporation dans laquelle elles coïncident, dans une position de fermeture dans laquelle elles sont décalées angulairement, et comprenant en outre un organe de fixation (3) disposé sur la surface latérale de l'un des corps creux, caractérisé en ce que le corps creux extérieur (2) est réalisé sous forme de douille de serrage auto-élastique qui présente une section transversale en cercle partiel et s'étend au moins sur toute la longueur de la zone d'évaporation (1d) du corps creux intérieur (1), et en ce que la section transversale en cercle partiel présente, au moins sur une partie de la longueur de la douille de serrage, la longueur d'arc d'un angle concave (2a).

2. Dispositif selon la revendication 1, caractérisé en ce qu'afin d'assujettir le corps creux intérieur (1) et la douille de serrage (2) dans leur position mutuelle en direction axiale, l'un de ces deux organes s'engage dans un profil en forme de gorge annulaire (1a) de l'autre organe.

3. Dispositif selon la revendication 1, caractérisé en ce qu'au moins l'une des deux régions d'extrémité du corps creux intérieur (1) est réalisée sous forme de chambre qui est garnie d'un tampon (4) contenant la substance active et à partir de laquelle une mèche rectiligne (7) servant d'organe d'évaporation s'étend dans la région moyenne du corps creux intérieur (1) qui présente la zone d'évaporation.

4. Dispositif selon la revendication 3, caractérisé en ce que le corps creux intérieur (1), la chambre (ou les chambres) de substance active et la mèche (7) (ou les mèches) constituent une unité remplaçable, enclenchable dans la douille de serrage (2).

5. Dispositif selon la revendication 3, caractérisé en ce que la chambre de substance active est entourée par une douille (6) semblable à une cartouche qui est introduite en glissant dans une région d'extrémité du corps creux intérieur (1).

6. Dispositif selon la revendication 1, caractérisé par un organe en forme de barre (33) qui est disposé de façon remplaçable à peu près au centre du corps creux intérieur (31) et dont la surface latérale (33a) est poreuse, au moins sur une partie de son étendue, et entoure une garniture de matière absorbante contenant la substance active.

7. Dispositif selon la revendication 1, caractérisé en ce que la douille de serrage (2) est pourvue, sur sa surface extérieure, de moyens de fixation tels qu'une surface collante, une surface d'adhérence aimantée ou une agrafe de serrage (3).

8. Dispositif selon la revendication 7, caractérisé en ce que l'agrafe de serrage est orientée perpendiculairement à l'axe longitudinal du dispositif et s'étend de telle sorte que son plan de serrage est à peu près tangent au dispositif (V).

**Claims**

1. A device (V) for evaporation of an effective substance for influencing the ambient air in particular in motor vehicles, comprising two elongate cylindrical hollow bodies (1, 2) which are concentrically mounted one within the other and which enclose a chamber for the effective substance to be evaporated and the peripheral walls of which are each provided with a respective gas-permeable evaporation zone (1d, 2b) and which are movable by a relative mutual angular displacement of the hollow bodies from an aligned evaporation position into an angularly displaced closure position, and further comprising a fixing member (3) arranged on the peripheral portion of one of the hollow bodies, characterised in that the outer hollow body (2) is in the form of an inherently resilient clamping sleeve which is of a part-circular cross-section and which extends at least over the length of the evaporation zone (1d) of the inner hollow body (1), and that the part-circular cross-section, at least over a part of the length of the clamping sleeve, is of the arcuate length of an over-obtuse angle (2a).

2. A device according to claim 1 characterised in that for the purposes of axially securing the inner hollow body (1) and the clamping sleeve (2) in position relative to each other one of said two members engages into an annular groove-like configuration (1a) provided on the other member.

3. A device according to claim 1 characterised in that at least one of the two end regions of the inner hollow body (1) is in the form of a chamber which is provided with a plug (4) containing the effective substance and out of which a straight wick (7) acting as the evaporation member extends into the middle region, which has the evaporation zone, of the inner hollow body (1).

4. A device according to claim 3 characterised in that the inner hollow body (1), the effective substance chamber (or chambers) and the wick (7) (or wicks) form a replacement unit which can be snap-engaged into the clamping sleeve (2).

5. A device according to claim 3 characterised in that the effective substance chamber is enclosed by a cartridge-like sleeve (6) which is inserted into an end region of the inner hollow body (1).

6. A device according to claim 1 characterised by a bar-like member (33) which is arranged replaceably approximately centrally in the inner hollow body (31) and the peripheral portion (33a) of which is porous at least over a part of its surface area and encloses a filling of absorbent material containing the effective substance.

7. A device according to claim 1 characterised in that the clamping sleeve (2) is provided on its outside with a fixing means such as an adhesive surface, a magnetic attachment surface or a clamping clip (3).

8. A device according to claim 7 characterised in that the clamping clip (3) is oriented transversely with respect to the longitudinal direction of the device and extends with its clamping plane substantially tangentially relative to the device (V).

Fig.1

Fig.2

Fig.3

Fig. 4

Fig. 5